# EUROPEAN PATENT APPLICATION

(11) **EP 1 314 539 A1**
(43) Date of publication of application: **28.05.2003**
(21) Application number: 02025666.5
(22) Date of filing: 20.11.2002
(51) Int. Cl.: B29C 65/20

(54) **Device for thermal welding of connectors on the wall of plastic pipes**

(30) Priority: 27.11.2001 IT PD20010110 U
(71) Applicant: RITMO s.r.l., 35033 Bresseo di Teolo (Padova) (IT)
(72) Inventor: Bortoli, Renzo, 35038 Torreglia (Prov.of Padova) (IT)
(74) Representative: Modiano, Guido, Dr.-Ing.

(57) **Abstract**

A device for thermal welding of connectors on the wall of plastic pipes, comprising male/female bushes (10, 11), heated by conduction by means of a plate (15), which are provided at their end with means for temporary coupling respectively to a suitable hole of the pipe and to the connector to be mated; the surface of the heads of the bushes provided with the coupling means has a parallel knurling (25, 26) formed by grooves and ridges.

## Description

The present invention relates to an improved device for thermal welding of connectors on the wall of plastic pipes.

Plastic pipes are currently widely used to distribute fluids.

Branch connectors are conveniently joined by mating in suitable holes and by thermal welding.

Male/female bushes, heated by conduction by means of a plate to which they are fixed, are currently used for this operation.

The bushes are provided, at their end, with temporary means (a male element and a female receptacle) for coupling respectively to a suitable hole of the pipe and to the connector to be mated.

Although the thermal welding of mating connectors is a welding practice that has been widely used for years and is by now well-tested, it is not free from drawbacks, the main one being due to the fact that the plastic material tends to spread during heating under pressure due to its softening.

Moreover, during mating and welding part of the material of the mating connectors is arranged in regions of the pipe that are not affected by the weld.

The aim of the present invention is to provide a device for thermal welding of connectors on the wall of plastic pipes that contains the spread of the material of the mating connector, avoiding spreading into regions excluded from welding.

Within this aim, a consequent primary object is to increase the region or cross-section actually affected by the weld.

Another object is to increase the heated surface of the welding device in order to improve the welding operation itself.

Another object is to provide a thermal welding device that does not have particular constructive complications with respect to known types and has a low cost.

This aim and these and other objects that will become better apparent hereinafter are achieved by a device for thermal welding of connectors on the wall of plastic pipes, of the type that comprises male/female bushes, heated by conduction by means of a plate, which are provided at their end with means for temporary coupling respectively to a suitable hole of the pipe and to the connector to be mated, said device being characterized in that the surface of the heads of said bushes provided with said coupling means has a parallel knurling formed by grooves and ridges.

Advantageously, the knurling is uniformly distributed on the surface of the heads of said bushes and the profile of the grooves and ridges is V-shaped.

Further characteristics and advantages of the invention will become better apparent from the detailed description of an embodiment thereof, illustrated only by way of non-limitative example in the accompanying drawings, wherein:

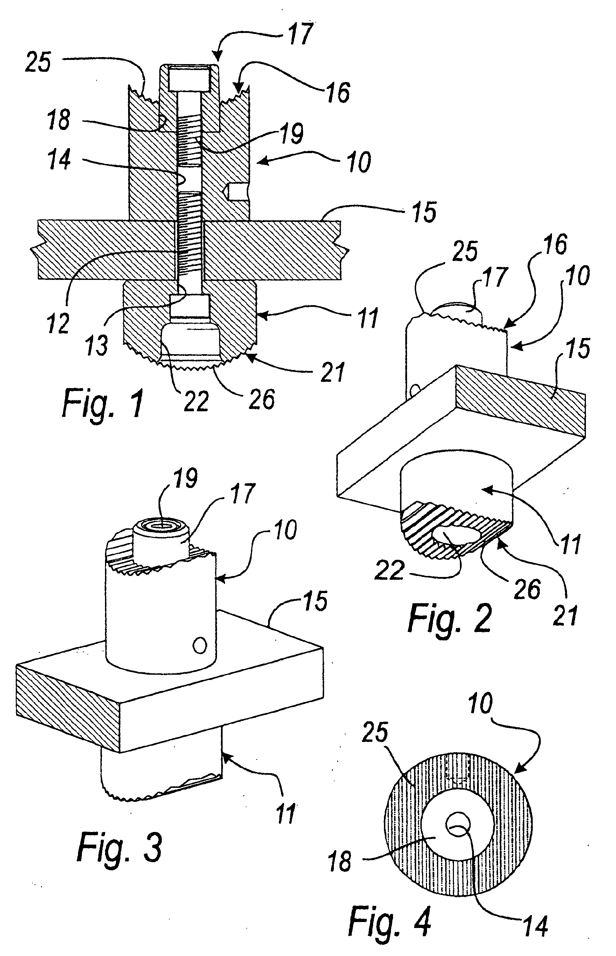

Figure 1 is a sectional view of a device according to the invention;
Figures 2 and 3 are perspective views of the device of Figure 1;
Figure 4 is a front view of a male bush comprised within the device of Figure 1, uncoupled from the other components;
Figures 5 to 9 are perspective views of the succession of operating steps of the welding process that uses the device according to the invention.

With reference to the figures, an improved device for thermal welding with mating of connectors on the wall of plastic pipes comprises a male bush 10 and a female bush 11, which are kept together coaxial by a screw element 12 with a hexagonal socket head, which is inserted in a through hole 13 of the latter (with a receptacle for said hexagonal socket head) and engages in a threaded hole 14 of the former.

A heated plate 15 is interposed between the male bush 10 and the female bush 11.

The bushes are of the type provided, at their end, with means for temporary coupling respectively to a suitable hole of the pipe and to the connector to be mated.

In particular, the male bush 10 has an end surface 16 that is concave and shaped like a portion of a cylindrical surface, and supports, so that it protrudes centrally, a cylindrical male element 17 that is inserted partially in a complementarily shaped seat 18 thereof and is fixed by means of a screw element 19 with a hexagonal socket head, which passes through the male element 17 in an axial through hole and engages in the threaded hole 14 the male bush 10.

The female bush 11 instead has an end surface 21 that is convex and shaped like a portion of a cylindrical surface, provided centrally with a cylindrical recess 22 for partial insertion of a connector 23 to be welded by mating to the wall of a plastic pipe 24.

The connector 23 is conveniently provided with an external annular collar 23a.

According to the invention, the head surfaces 16 and 21 of the male and female bushes 10 and 11 have a parallel knurling, designated by the reference numerals 25 and 26 respectively, with grooves and ridges.

Advantageously, the grooves and ridges have V-shaped sectional profiles.

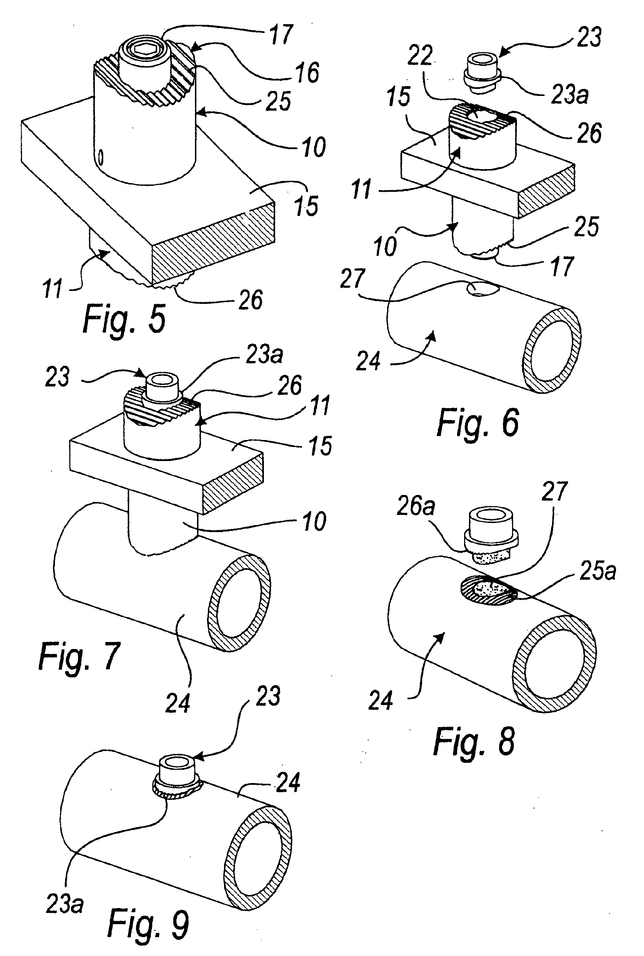

Operation, with reference to Figures 5 to 9, is as follows: a hole 27 is formed in the pipe 24 where the connector 23 is to be welded.

The male bush 10 and the female bush 11 coupled to the heated plate 15 are moved toward the pipe 24, inserting the male element 17 in the hole 27 and inserting the connector 23 partially in the cylindrical slot 22 until abutment of the collar 23a occurs.

By conduction, the hole 27 and the connector 23 are heated until softening occurs.

The knurlings 25 and 26 of the surfaces 16 and 21 constitute an increase in the heating surface by means of which the pipe 24 and the connector 23 make contact.

The knurling contains the material that has softened during heating under pressure, preventing it from being arranged in a region that is subsequently excluded from welding.

Knurlings 25a and 26a are formed respectively on the pipe 24 and on the collar 23a of the connector 23.

Then the bushes 10 and 11, coupled to the plate 15, are removed and the connector 23 is inserted in the hole 27 of the pipe 24, obtaining the weld.

The coupling between the knurlings 25a and 26a avoids spreading of the material outside the welding region.

The particular knurled geometric shape given to the material at the end of the heating process allows optimum distribution and mixing of the polymer, with more efficient and deeper penetration and consequently with an increase in the welded region or cross-section.

In practice it has been found that the intended aim and objects of the present invention have been achieved.

In practice, the materials employed, so long as they are compatible with the contingent use, as well as the dimensions, may be any according to requirements.

The disclosures in Italian Utility Model Application No. PD2001U000110 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for thermal welding of connectors on the wall of plastic pipes, of the type that comprises male/female bushes, heated by conduction by means of a plate, which are provided at their end with means for temporary coupling respectively to a suitable hole of the pipe and to the connector to be mated, said device being **characterized in that** the surface of the heads of said bushes provided with said coupling means has a parallel knurling formed by grooves and ridges.

2. The device according to claim 1, **characterized in that** said knurling is distributed uniformly on the surfaces.

3. The device according to claim 1, **characterized in that** the profile of the grooves is V-shaped.

4. The device according to claim 1, **characterized in that** the profile of the ridges is V-shaped.
